# EUROPEAN PATENT SPECIFICATION

(11) **EP 3 266 601 B1**
(45) Date of publication and mention of the grant of the patent: **06.03.2019**
(21) Application number: 17179550.3
(22) Date of filing: 04.07.2017
(51) Int. Cl.: B29D 30/48

(54) **QUICK-DISASSEMBLY, ROTATING DRUM FOR PRODUCING A BEAD OF A TYRE**
SCHNELL-DEMONTIERBARE ROTIERENDE TROMMEL FÜR DIE REIFENWULSTHERSTELLUNG
TAMBOUR ROTATIF À DÉMONTAGE RAPIDE POUR LA FABRICATION DE TRINGLES POUR PNEUMATIQES

(30) Priority: 06.07.2016 IT 201600070310
(43) Date of publication of application: 10.01.2018
(73) Proprietor: Bridgestone Europe NV, 1932 Zaventem (BE)
(72) Inventor: Barbati, Oreste, 00128 Roma (IT)
(74) Representative: Marchetti, Alessio

(56) References cited:
- US-A- 3 895 986
- US-A- 4 795 522
- US-A1- 2011 297 298
- US-A1- 2014 000 752
- US-A1- 2014 161 584
- US-A1- 2015 174 841
- US-B1- 6 352 602

## Description

### TECHNICAL SECTOR

The present invention relates to a rotating drum for the formation of a tyre bead.

### PRIOR ART

The bead of a tyre is the contact area between the rim and the tyre which must guarantee both mechanical anchorage and hermetic sealing; i.e., the bead must ensure the working coupling between the tyre and the rim, transmitting between the tyre and the rim the driving torque and braking torque.

The bead of a tyre is in the form of a ring and comprises a bead core (also called "*bead wire*") having a rectangular cross section and a bead filler having a triangular cross section and having a base that rests on the bead core. The bead core is composed of a metallic wire (usually steel) that is spiral wound in order to form a relatively high number of turns and is embedded within a rubber-based compound. The bead filler is composed solely of a rubber-based compound that is extruded.

The patent US4795522A1 describes a rotating drum for the formation of a tyre bead. The rotating drum comprises a central shaft rotatably mounted in order to rotate about a vertical axis of rotation and a support disk that is arranged horizontally and carried by the central shaft. The support disk has a frustum-conical shape and comprises a central horizontal surface suited to support the bead core and a peripheral inclined surface suited to support the bead filler. The rotating drum is fitted with a locking device, which is suited to hold (i.e., to lock in a predetermined fixed position) the bead core resting on the central horizontal surface of the support disk; the locking device comprises a plurality of circular sectors that are arranged within the central horizontal surface suited to support the bead core and are radially movable between a contracted unlocked position (wherein the circular sectors are closer to the axis of rotation and do not engage with the inner wall of the bead core) and an expanded locked position (wherein the circular sectors are further away from the axis of rotation and rest with a certain pressure against the inner wall of the bead core) .

In use, the bead core is placed on the central horizontal surface of the support disk while the locking device is in the unlocked position; the locking device is then moved to the locked position in order to firmly anchor the bead core to the support disk; subsequently, the support disk is slowly rotated around the axis of rotation in order to make it possible to progressively wrap a crude rubber strip (that constitutes the bead filler) onto the peripheral inclined surface in contact with the bead core. Pressure members are provided, which press the crude rubber strip (which constitutes the bead filler) against the bead core in order to promote the stable adhesion of the crude rubber strip to the bead core. Once the wrapping of the crude rubber strip (which constitutes the bead filler) is complete, the bead is ready and is withdrawn from the support disk after the locking device has been moved back to the unlocked position.

For every tyre diameter, there is a related corresponding bead diameter; it is consequently necessary to produce beads of varying diameters in order to be able to assemble tyres of differing diameters. In varying the diameter of the bead, it is consequently necessary to vary the size of the rotating drum; in know production plants, when it is necessary to vary the diameter of the bead, the rotating drum is completely dismantled and replaced with a different drum.

However, a rotating drum has substantial weight (18-27 kg depending upon the actual size) and is difficult to manipulate by a single operator; therefore, in order to change the rotating drum in the case of a change to the diameter of the bead to be produced, the joint action of two operators is required (with a higher operating cost) in order to be able to perform the operation quickly, or else it must be accepted that a single operator perform the operation but with a longer timescale (possibly with the help of a small hoist).

The patent application US20110297298A1 and the patent application US20140161584A1 also describe a rotating drum for the formation of a tyre bead. The rotating drum comprises a central shaft rotatably mounted in order to rotate about a vertical axis and a support disk that is arranged horizontally, carried by the central shaft, and suited to support the bead core and the bead filler; furthermore, the rotating drum is equipped with a locking device, which is suited to hold (i.e. to lock in a predetermined fixed position) the bead core in position, resting on the support disk.

### DESCRIPTION OF THE INVENTION

The purpose of the present invention is to provide a rotating drum for the formation of a tyre bead, which is both free of the drawbacks described above and, at the same time, easy and economical to construct.

According to the present invention, a rotating drum is provided for the formation of a tyre bead as determined by independent claim 1. The invention further relates to a method for adapting the size of such rotating drum according to independent claim 16. Preferred embodiments are set out in the dependent claims.

### BRIEF DESCRIPTION OF THE DRAWINGS

The present invention will now be described with reference to the attached drawings, illustrating a non-limiting exemplary embodiment, wherein:
- Figure 1 is a schematic cross section of a tyre wherein some of the parts have been removed for clarity;
- Figure 2 is an enlarged view of an area of the tyre bead in Figure 1;
- Figure 3 is a side view of a rotating drum for the formation of a tyre bead.
- Figure 4 is a plan view of the rotating drum in Figure 3;
- Figure 5 is a side view and a longitudinal section along the line V-V of the rotating drum in Figure 3;
- Figure 6 is an exploded perspective view of the rotating drum in Figure 3;
- Figure 7 is a plan view of a support disk of the rotating drum in Figure 3;
- Figure 8 is a side view and a longitudinal section along the line VIII-VIII of the support disk in Figure 7;
- Figures 9 and 10 are two enlarged scale details of the exploded perspective view in Figure 8; and
- Figures 11-15 are five schematic views that illustrate the withdrawal sequence of the bead from the rotating drum of Figure 3.

### PREFERRED EMBODIMENTS OF THE INVENTION

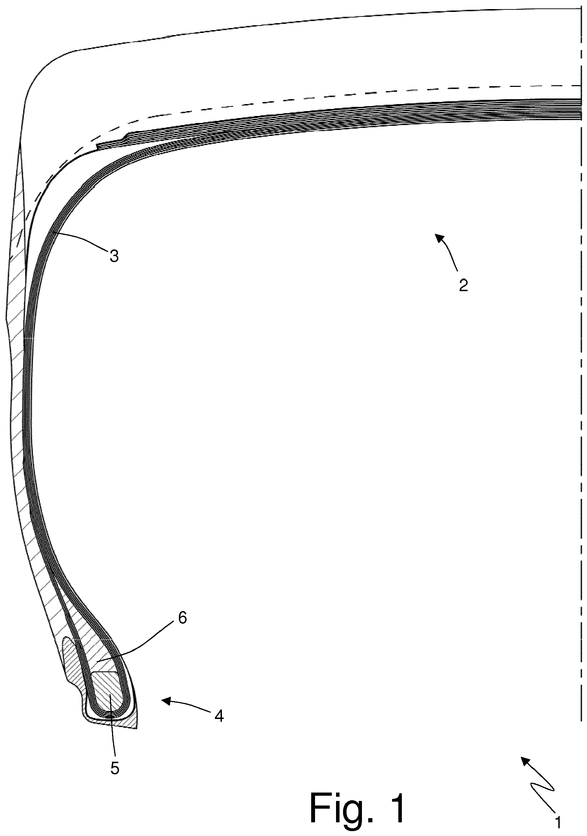

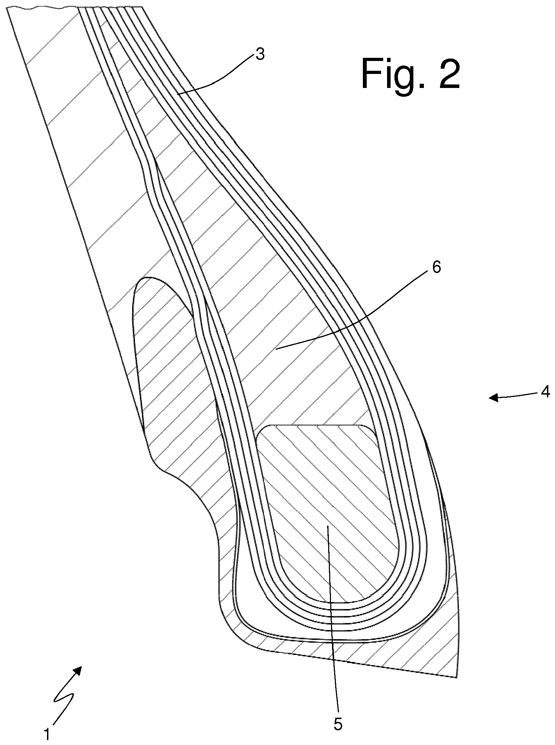

In Figures 1 and 2, with the number 1, a tyre is indicated, as a whole, comprising a toroidal carcass 2, which comprises a body ply 3 partly folded in on itself.

On opposite sides of the carcass 2 two ring beads 4 are arranged, each of which is surrounded by the body ply 3 and having a bead core 5 (also called "*bead wire*") reinforced with a number of turns of metallic wire and a bead filler 6. In particular, the bead 4 has a ring shape and is composed of a bead core 5 having a rectangular cross section and the bead filler 6 having a triangular cross section and having a base that rests on the bead core 5. The bead core 5 is composed of a metallic wire (usually steel) that is spiral wound in order to form a relatively high number of turns and that is embedded within a rubber-based compound. The bead filler 6 is composed solely of a rubber-based compound that is extruded.

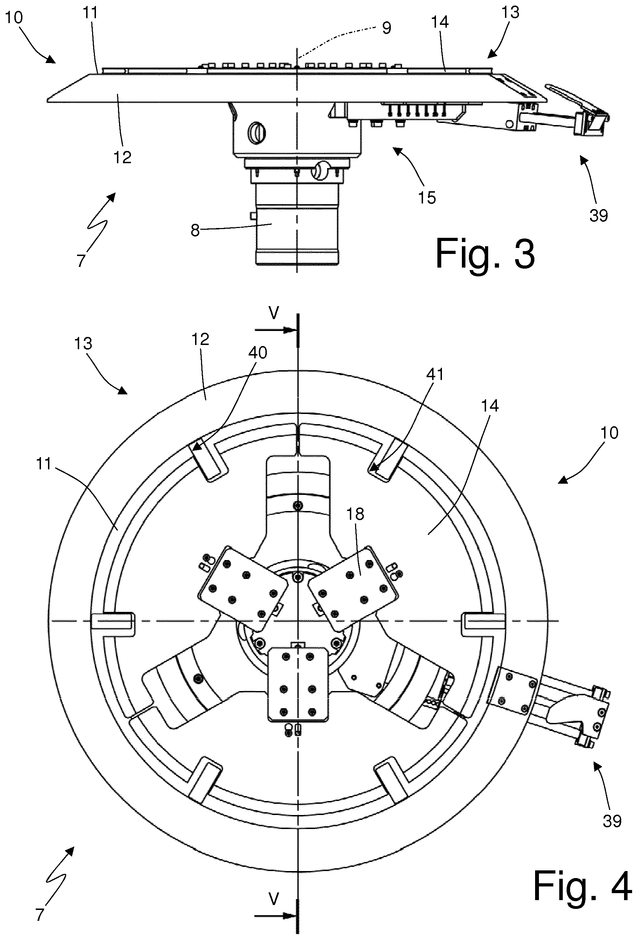

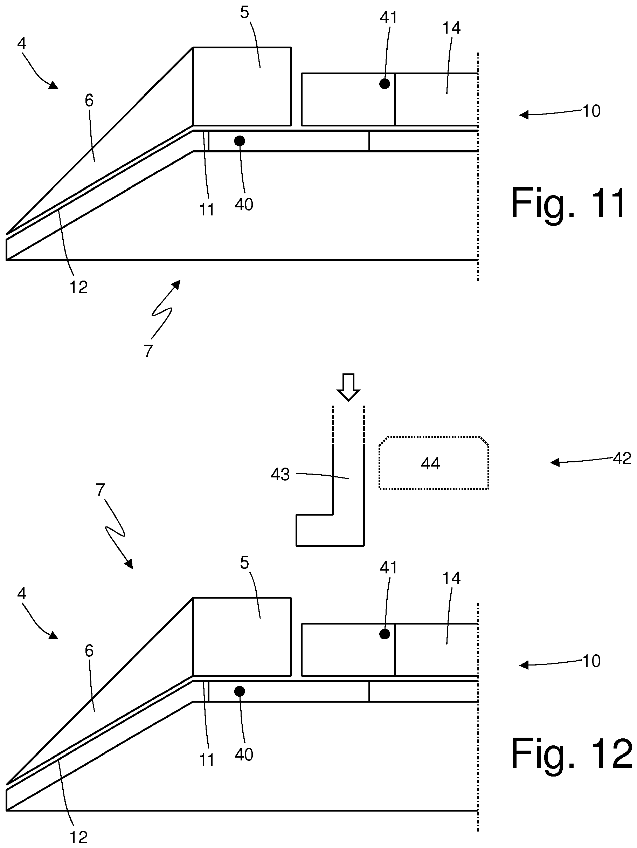

In figures 3-6, with the number 7 a rotating drum for the formation of a bead 4 is indicated as a whole. The rotating drum 7 comprises a central shaft 8 rotatably mounted in order to rotate about a vertical axis 9 of rotation and a support disk 10 that is arranged horizontally and carried by the central shaft 8. The support disk 10 has a frustum-conical shape and comprises a central horizontal surface 11 suited to support the bead core 5 and a peripheral inclined surface 12 suited to support the bead filler 6 (as illustrated in Figure 11) .

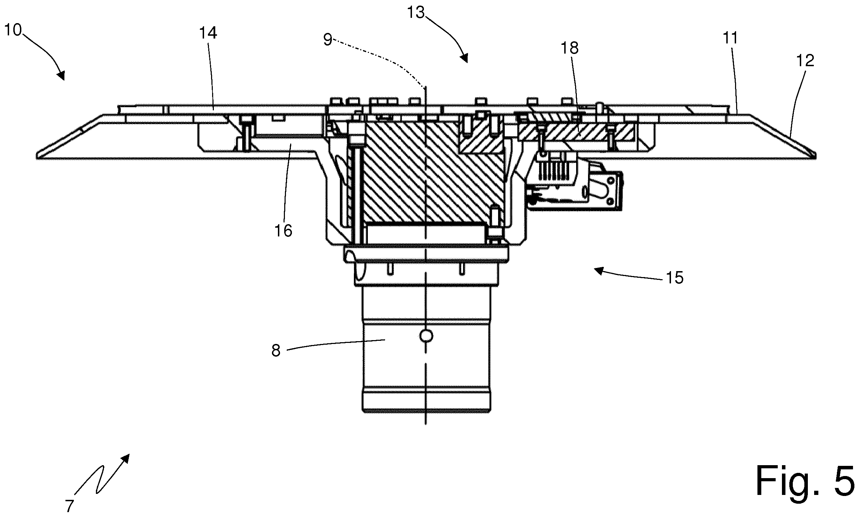

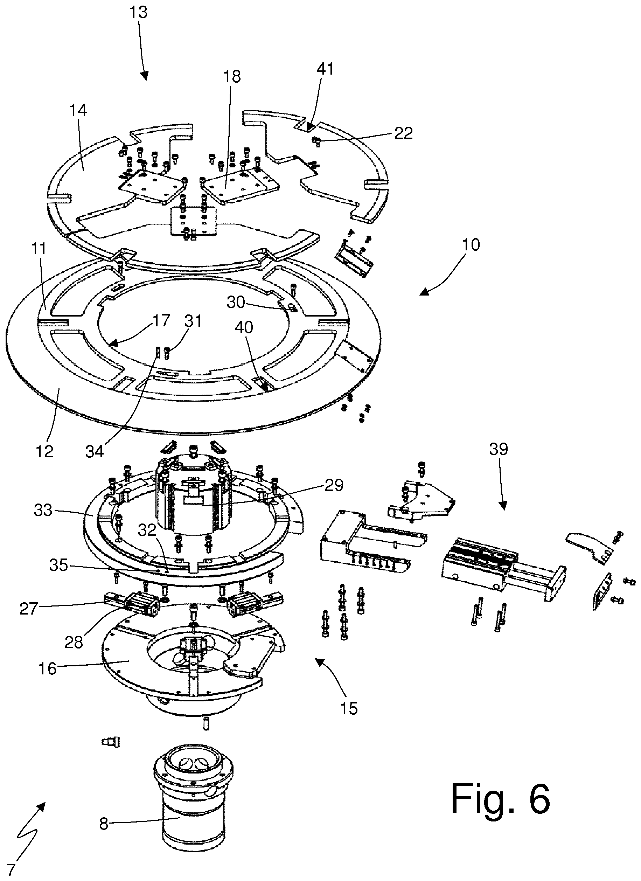

The rotating drum 8 comprises a locking device 13, which is pneumatically actuated and which is suited to hold (i.e., to lock in a predetermined fixed position) the bead core 5 in position on the central horizontal surface 11 of the support disk 10. The locking device 13 comprises three circular sectors 14 (but obviously the number thereof may change) that are arranged within the central horizontal surface 11 suited to support the bead core 5 and are radially movable between a contracted unlocked position (wherein the circular sectors 14 are closer to the axis of rotation 9 and do not engage with the inner wall of the bead core 5) and an expanded locked position (wherein the circular sectors 14 are further away from the axis of rotation 9 and rest with a certain pressure against the inner wall of the bead core 5). The locking device 13 also comprises an actuating device 15 (illustrated in Figures 5 and 6) of a pneumatic type (but it may also be hydraulic or electrical) that implements the radial movement of the circular sectors 14 between the expanded locked position and the contracted unlocked position.

The rotating drum 8 comprises a circular support plate 16 (visible in Figures 5 and 6) which is arranged horizontally, being rigidly integral to the shaft 8, carrying the actuating device 15 of the locking device 13, and carrying the support disk 10 separately from the actuating device 15; that is to say, the support disk 10 is mechanically independent from the actuating device 15, having no parts in common with the actuating device 15, and the support disk 10 having no overlap at all with the actuating device 15.

According to that which is illustrated more clearly in Figures 6, 7 and 8, the support disk 10 has a circular central opening 17 wherein a plurality of connecting elements 18 is arranged, each of which implements a mechanical connection between the actuating device 15 and a corresponding circular sector 14. In particular, each connecting element 18 comprises a substantially rectangular shaped metallic plate.

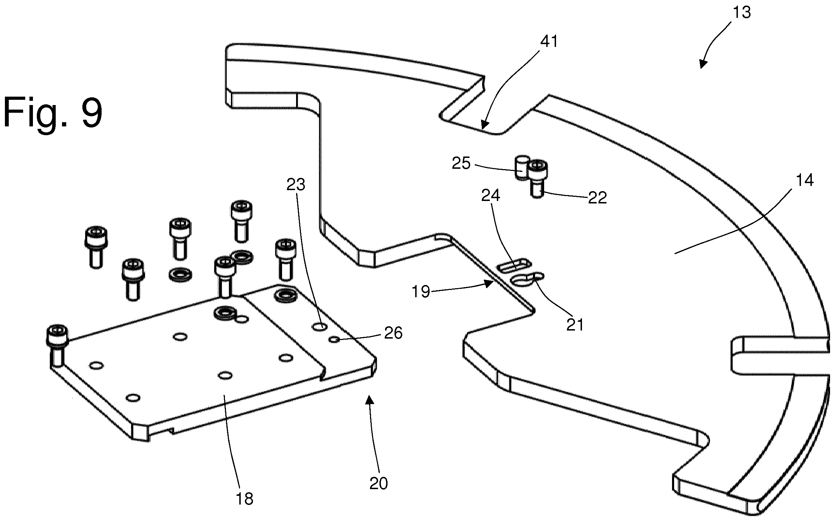

According to a preferred embodiment which is illustrated more clearly in Figure 9, each circular sector 14 comprises a coupling seat 19, and each connecting element 18 has a coupling end 20 which is inserted into the corresponding coupling seat 19 and reproduces in negative the shape of the same coupling seat 19. Each coupling seat 19 has a through-hole 21 through which a locking screw 22 is arranged which is screwed into a threaded hole 23 (typically, but not necessarily, blind) made within the coupling end 20 of the corresponding connecting element 18. According to a preferred, but non-limiting, embodiment, each through-hole 21 has a radially elongated shape (i.e., in a radial direction) having on one side, a width that is less than the diameter of the head of the first locking screw 22 and on the opposite side a width that is greater than the diameter of the head of the third locking screw 22; in this way, each circular sector 14 can be inserted/removed from the corresponding locking screw 22 without completely unscrewing the locking screw 22 itself from the threaded hole 23 thereof that is made in the coupling end 20 of the underlying connecting element 18. According to a preferred, but non-limiting, embodiment, each coupling seat 19 has a through-hole 24 through which a reference pin 25 is arranged which is inserted into a blind hole 26 made in the coupling end 20 of the corresponding connecting element 18. Preferably, the through-hole 24 has a radially elongated shape (i.e., in the radial direction) similar to that of the through-hole 21.

In use, in order to remove a circular sector 14, the corresponding locking screw 22 is initially loosened (but not completely unscrewed), the circular sector 14 is then moved radially in order to move the head of the locking screw 22 to the widest portion of the through-hole 21, and finally the circular sector 14 is axially unscrewed in order to decouple the coupling holes 21 and 24 of the coupling seat 19 respectively from the locking screw 22 and from the reference pin 25. In use, in order to mount a circular sector 14, the aforementioned steps are followed in reverse order, i.e., the circular sector 14 is initially axially inserted in order to couple the coupling holes 21 and 24 of the coupling seat 19 respectively into the locking screw 22 and into the reference pin 25, the circular sector 14 is then moved radially in order to move the head of the locking screw 22 to the narrowest portion of the through-hole 21, and finally the corresponding locking screw 22 is tightened in order to prevent radial sliding of the circular sector 14.

According to that which is illustrated in Figure 6, for each circular sector 14, the actuating device 15 comprises a guide 27 radially arranged and rigidly mounted on the support plate 16 and a slider 28 which slides along the guide 27 and is rigidly connected to the corresponding connecting element 18. Furthermore, the actuating device 15 comprises a single common pneumatic actuator 29 which synchronously varies the radial position of the slides 28 along the guides 27.

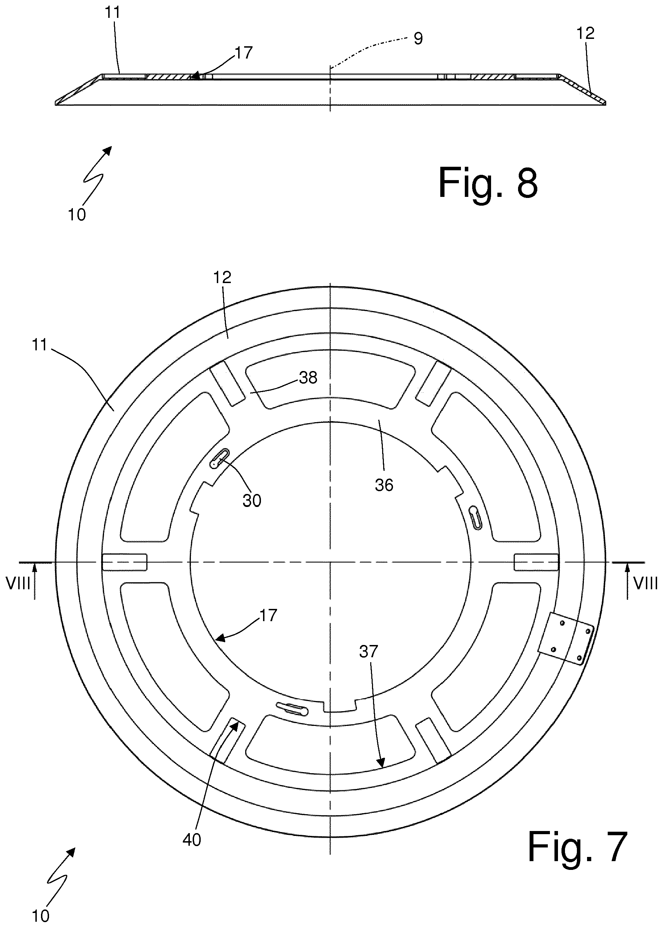

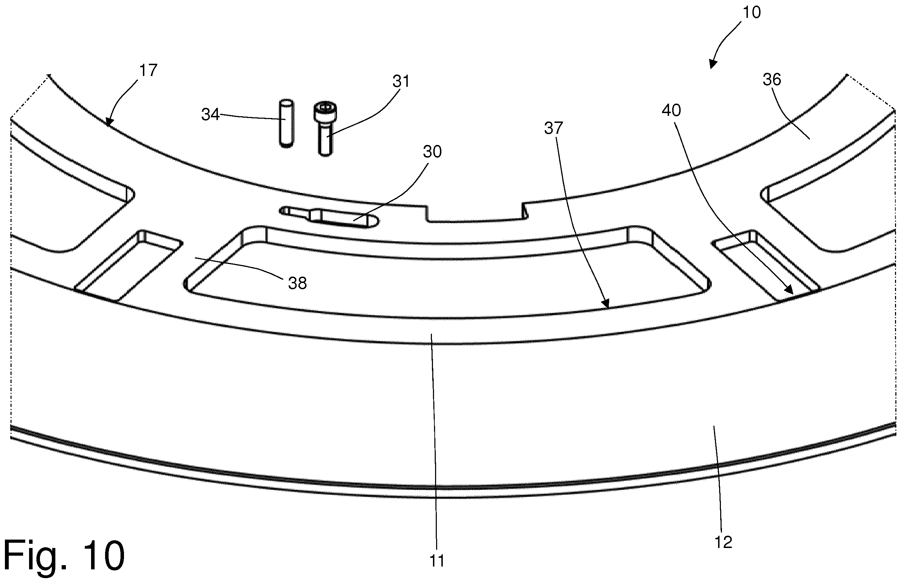

As illustrated in Figures 6 and 10, the support disk 10 has three through-holes 30 (only one of which is illustrated in Figure 10, while all three are visible in Figures 6 and 7); through each hole 30, a locking screw 31 is arranged that is screwed into a threaded hole 32 made in the support plate 16. According to a preferred, but non-limiting, embodiment, the support plate 16 comprises a ring 33 that is screwed onto the support plate 16, constitutes an extension to the support plate 16 (i.e., it is part of the support plate 16 itself), and supports the hole 32 (i.e., the threaded hole 32 is made in the ring 33). According to a preferred, but non-limiting, embodiment, each through-hole 30 has a circumferentially elongated shape (i.e., along an arc of circumference) having on one side, a width that is less than the diameter of the head of the locking screw 31, and on the opposite side a width that is greater than the diameter of the head of the locking screw 31; in this way, the support disk 10 can be inserted/removed from the corresponding locking screws 31 without completely unscrewing the same locking screws 31 from the threaded holes 32 thereof made in the ring 33 of the underlying support disk 16.

According to a preferred, but non-limiting, embodiment, through each hole 30 a reference pin 34 is also arranged that is inserted into a hole 35 made in the support plate 16 (particularly in the ring 33 of the support plate 16). In other words, each hole 30 is common to a locking screw 31 and a reference pin 34; alternatively, the through-holes 30 may only be used for the locking screws 31 whilst various through-holes may be present (circumferentially elongated as per the through-holes 30) for the reference pins 34.

In use, in order to remove the support disk 10, the locking screws 31 are initially loosened (but not completely unscrewed), the support disk 10 is then rotated in order to move the head of each locking screw 31 to the widest portion of the through hole 30, and finally the support disk 10 is axially unscrewed in order to decouple the through-holes 30 from the locking screws 31 and from the reference pins 34. In use, in order to mount a support disk 10, the aforementioned steps are followed in reverse order, i.e., the support disk 10 is initially axially inserted in order to couple the through-holes 30 in the locking screws 31 and the reference pins 34, the circular sector 10 is then rotated in order to move the head of each locking screw 31 to the narrowest portion of the corresponding through-hole 30, and finally the locking screws 30 are tightened in order to prevent rotation of the support disk 10.

According to a preferred, but non-limiting, embodiment better illustrated in Figures 7 and 10, the support disk 10 comprises a mounting ring 36, which is arranged around the central opening 17, delimiting the same central opening 17, and resting on the support plate 16 (particularly on the ring 33 of the support plate 16). The through-holes 30 are made through the mounting ring 36. Furthermore, between the mounting ring 36 and the central horizontal surface 11, circular sector passageways 37 are made in such a way that the central horizontal surface 11 is connected to the mounting ring 36 only by means of a plurality of radially oriented and relatively thin spokes 38.

According to that which is better illustrated in Figures 3, 4 and 6, the rotating drum 7 comprises an additional locking device 39 which is pneumatically controlled and suited to lock (fix) an initial end of a crude rubber strip (which constitutes the bead filler 6) onto the peripheral inclined surface 12.

According to a preferred embodiment better illustrated in Figures 7 and 10, the central horizontal surface 11 has a plurality of passing withdrawal openings 40, each of which radially extends internally with respect to the bead core 5 resting on the same central horizontal surface 11; Preferably (but not necessarily), each withdrawal opening 40 has a radially oriented rectangular form, i.e., having sides that are more radially arranged. According to a preferred embodiment better illustrated in Figures 4 and 9, the circular sectors 14 of the locking device 13 have a plurality of recesses 41, each of which is axially aligned with a corresponding withdrawal opening 40 and having a size not less than the size of the withdrawal opening 40 (preferably each recess 41 is slightly larger than the corresponding withdrawal opening 40, as illustrated in Figure 4).

As illustrated in Figures 12-15, a withdrawal system 42 is provided which is suited to remove a completed bead 4 from the support disk 10 comprising of a plurality of hooks 43, each of which is "L"-shaped and suited to be inserted within a corresponding withdrawal opening 40 passing alongside the bead core 5. Furthermore, the withdrawal system 42 comprises an actuating device 44 which is suited to move the hooks 43 vertically downwards in order to insert the hooks 43 through the respective withdrawal openings 40 passing alongside the bead core 5, being then suited to move the hooks 43 radially outwards in order to engage the bead core 5, and finally being suited to move the hooks 43 vertically upwards in order to lift the bead 4 from the bead core 5.

Described hereinafter is the operation of the rotating drum 7 for the manufacture of a bead 4.

Initially, the bead core 5 is placed on the central horizontal surface 11 of the support disk 10 while the locking device 13 is in the unlocked position, the locking device 13 is then moved to the locked position in order to firmly anchor the bead core 5 onto the support disk 10; subsequently, the support disk 10 is slowly rotated around the axis of rotation 9 in order to make it possible to progressively wrap a crude rubber strip (that constitutes the bead filler 6) onto the peripheral inclined surface 12 in contact with the bead core 5 (an initial end of the rubber strip is locked onto the peripheral surface 12 by means of the locking device 39). Pressure members are normally provided (known and not illustrated) that press the crude rubber strip (which constitutes the bead filler 6) against the bead core 5 in order to promote the stable adhesion of the crude rubber strip to the bead core 5. Once the wrapping of the crude rubber strip (which constitutes the bead filler 6) is complete, the bead is ready and is withdrawn from the support disk 10 by the withdrawal system 42 after the locking device 13 has been moved back to the rest position.

With reference to Figures 11-15, the operation is hereinafter described of the withdrawal system 42 for withdrawing the bead 4 from the rotating drum 7.

Initially (as illustrated in Figure 11), the bead 4 is resting on the support disk 10 of the rotating drum 7, and in particular the bead core 5 is resting against the central horizontal surface 11 of the support disk 10 whilst the bead filler 6 is resting on the peripheral inclined surface 12.

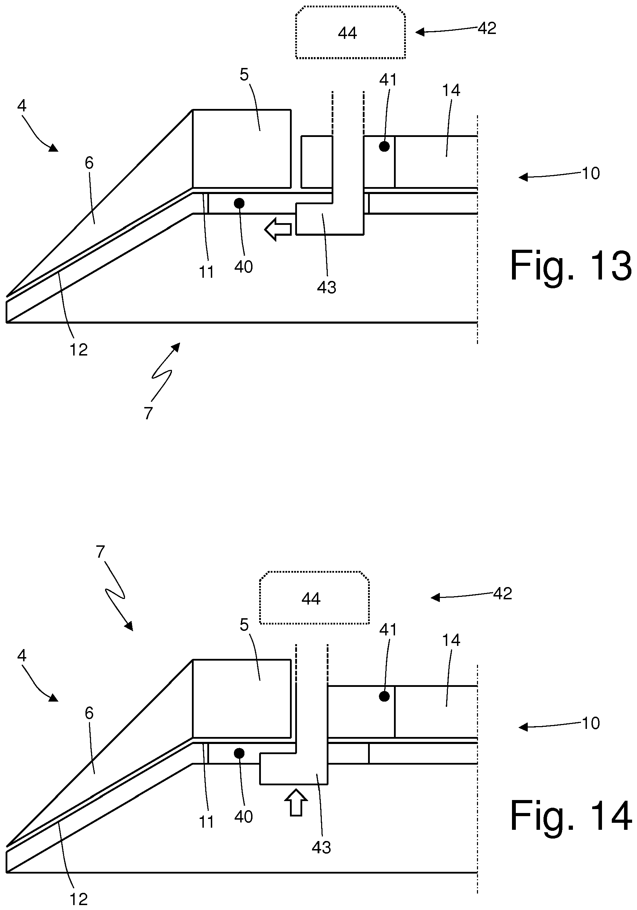

Subsequently (as illustrated in Figure 12), the actuating device 44 moves the hooks 43 vertically downwards in order to insert the hooks 43 through the respective withdrawal openings 40 passing alongside the bead core 5; in particular, each hook 43 initially passes through a corresponding recess 41 of a circular sector 14 of the locking device 13 and then passes through a corresponding withdrawal opening 40 of the central horizontal surface 11 of the support disk 10 until reaching a lower limiting position wherein the passing hook 43 itself is located beneath the bead core 5 (as shown in Figure 13).

At this point (as illustrated in Figure 14), the actuating device 44 moves the hooks 43 radially outwards in order to bring the hooks 43 into contact with the bead core 5. Preferably (but not necessarily), the locking device 13 remains in the expanded locked position up until the bead core 5 has also been engaged by the hooks 43; it is then arranged in the unlocked contracted position only after the hooks 43 have engaged with the bead core 5. In this way, the correct position of the bead 4 is always guaranteed insofar as the bead 4 is never left free to move without being under control.

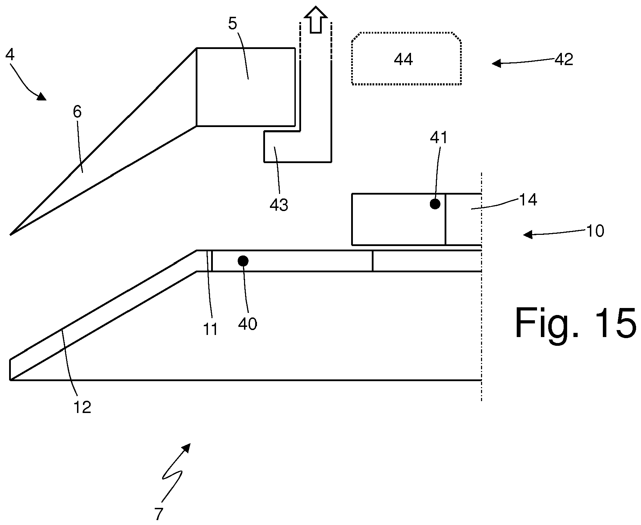

Finally (as illustrated in Figure 15), the actuating device 44 moves the hooks 43 vertically upwards in order to lift the bead 4 from the bead core 5 (i.e., by raising the bead 4 by grasping the bead 4 itself from the bead core 5); during this step, the hooks 43 emerge through the corresponding withdrawal openings 40.

For every tyre 1 diameter there is a related corresponding bead 4 diameter; consequently, it is necessary to produce beads 4 of varying diameters in order to be able to assemble tyres 1 of differing diameters. In varying the diameter of the bead 4, it is consequently necessary to vary the size of the support disk 10, i.e., it is necessary to replace the old support disk 10 mounted on the rotating drum 7 with a new support disk 10 of a different diameter. In order to adapt the size of the rotating drum 7 to a different bead 4 diameter, i.e., to replace the old support disk 10 mounted on the rotating drum 7 with a new support disk 10 of a different diameter, it is necessary to remove the circular sectors 14 of the locking device 13 (as per the method described above), remove the old support disk 10 (as per the method described above), insert the new support disk 10 having a diameter that is different than the old support disk 10 (as per the method described above), and finally to reinsert the previously removed circular sectors 14 (as per the method described above).

The rotating drum 7 described above has many advantages.

Firstly, the rotating drum 7 described above makes it possible to replace the old support disk 10 mounted on the rotating drum 7 with a new support disk 10 of a different diameter in a rapid and easy manner even in the case of a single operator. This result is achieved because the operator must manually manipulate mechanical parts (the circular sectors 14 of the locking device 13 and support disk 10) of relatively low weight (less than 10 kg). Furthermore, this result is obtained insofar as the mechanical fastening system for the circular sectors 14 of the locking device 13 and the mechanical fastening system for the support disk 10 allow for rapid locking/unlocking by tightening/loosening (without removing) a limited number of locking screws 22 and 31.

Furthermore, the rotating drum 7 described above makes it possible to rapidly withdraw, in a fully automatic manner, and whilst always maintaining precise positional control, the bead 4 from the support disk 10 once the bead 4 has been completed.

## Claims

1. Rotating drum (7) for the formation of a bead (4) of a tyre (1); the rotating drum (7) comprising:
a central shaft (8) rotatably mounted in order to rotate about a vertical axis (9) of rotation;
a support disk (10) that is arranged horizontally, being carried by the central shaft (8), having a frustum-conical shape, and comprising a central horizontal surface (11) suited to support the bead core (5) and a peripheral inclined surface (12) suited to support the bead filler (6); and
a locking device (13), which is suited to hold the bead core (5) resting on the central horizontal surface (11) of the support disk (10) and comprising: a plurality of circular sectors (14) that are arranged within the central horizontal surface (11) and that are movable radially between a contracted unlocked position and an expanded locked position, and a first actuating device (15) that implements the radial movement of the circular sectors (14); wherein
a circular support plate (16) is provided which is arranged horizontally, rigidly integral to the shaft (8), carrying the first actuating device (15), and carrying, separately from the first actuating device (15), the support disk (10) in such a way that it can be removed by means of at least one first locking screw (31);
the support disk (10) has a single circular central opening (17) wherein a plurality of connecting elements (18) is arranged, each of which implements a mechanical connection between the first actuating device (15) and a corresponding circular sector (14); and
each connecting element (18) is removably connected by means of at least one second locking screw to the first actuating device (15) and is also removably connected by means of at least a third locking screw (22) to the corresponding circular sector (14).

2. Rotating drum (7) according to claim 1, wherein each circular sector (14) comprises a coupling seat (19), and each connecting element (18) has a coupling end (20) which is inserted into the corresponding coupling seat (19) and reproduces in negative the shape of the coupling seat (19).

3. Rotating drum (7) according to claim 2, wherein each coupling seat (19) has a first through-hole (21) through which a third locking screw (22) is arranged which is screwed into a second threaded hole (23) made in the coupling end (20) of the corresponding connecting element (18).

4. Rotating drum (7) according to claim 3, wherein the first through-hole (21) has a radially elongated shape having, on one side, a width that is less than the diameter of the head of the first locking screw (22) and, on the opposite side, a width that is greater than the diameter of the head of the third locking screw (22).

5. Rotating drum (7) according to claim 2, 3 or 4, wherein each coupling seat (19) has a third through-hole (24) through which a first reference pin (25) is arranged which is inserted into a fourth blind hole (26) made in the coupling end (20) of the corresponding connecting element (18).

6. Rotating drum (7) according to claim 5, wherein the third through-hole (24) has a radially elongated shape.

7. Rotating drum (7) according to one of claims 1 to 6, wherein, for each circular sector (14), the first actuating device (15) comprises a guide (27) arranged radially and mounted on the support plate (16) and a slider (28) which slides along the guide (27) and which is rigidly connected to the corresponding connecting element (18).

8. Rotating drum (7) according to claim 7, wherein the first actuating device (15) comprises a single common pneumatic actuator (29) which synchronously varies the radial position of the slides (28) along the guides (27).

9. Rotating drum (7) according to one of the claims 1 to 8, wherein the support disk (10) has at least a fifth through-hole (30) through which a first locking screw (31) is arranged that is screwed into a sixth threaded hole (32) made in the support plate (16).

10. Rotating drum (7) according to claim 9, wherein the fifth through-hole (30) has a circumferentially elongated shape having, on one side, a width that is less than the diameter of the head of the first locking screw (31), and on the opposite side a width that is greater than the diameter of the head of the first locking screw (31).

11. Rotating drum (7) according to claim 9 or 10, wherein each coupling seat (19) has a seventh through-hole (30) through which a second reference pin (34) is arranged that is inserted into an eighth blind hole (35) made in the support plate (16).

12. Rotating drum (7) according to claim 11, wherein the seventh through-hole (30) has a circumferentially elongated shape.

13. Rotating drum (7) according to claim 11 or 12, wherein the seventh through-hole (30) coincides with the fifth through-hole (30).

14. Rotating drum (7) according to one of the claims 9 to 13, wherein:
the support disk (10) comprises a mounting ring (36), which is arranged around the central opening (17), delimiting the same central opening (17) and resting upon the support plate (16);
the fifth through-hole (30) is made through the mounting ring (36); and
between the mounting ring (36) and the central horizontal surface (11), circular sector passageways (37) are made such that the central horizontal surface (11) is connected to the mounting ring (36) only by means of a plurality of radially oriented spokes (38).

15. Rotating drum (7) according to one of the claims 1 to 14, wherein:
the central horizontal surface (11) has a plurality of passing withdrawal openings (40), each of which radially extends internally with respect to the bead core (5) resting on the central horizontal surface (11);
at least some circular sectors (14) of the locking device (13) have a plurality of recesses (41) each of which is axially aligned with a corresponding withdrawal opening (40) and which has a size that it not less than the size of the same withdrawal opening (40); and
a withdrawal system (42) is provided which is suited to remove a completed bead (4) from the support disk (10) and comprises: a plurality of hooks (43), each of which is "L" shaped and suited to be inserted within a corresponding withdrawal opening (40) passing alongside the bead core (5); and an actuating device (44) which is suited to move the hooks (43) vertically downwards in order to insert the hooks (43) through the respective withdrawal openings (40) passing alongside the bead core (5), then being able to move the hooks (43) radially outwards in order to engage with the bead core (5), and finally being able to move the hooks (43) vertically upwards in order to lift the bead (4) .

16. Method for adapting the size of the rotating drum (7) in accordance with one of the claims from 1 to 15 to a different bead (4) diameter; the method comprises the steps of:
removing the circular sectors (14) of the locking device (13) ;
removing the old support disk (10);
inserting a new support disk (10) having a different diameter than the old support disk (10); and
reinserting the previously removed circular sectors (14).

## Patentansprüche

1. Drehtrommel (7) zur Bildung eines Wulstes (4) eines Reifens (1); wobei die Drehtrommel (7) umfasst:
eine Mittelwelle (8), die drehbar gelagert ist, um sich um eine vertikale Drehachse (9) zu drehen;
eine horizontal angeordnete Stützscheibe (10), die von der Mittelwelle (8) getragen wird, eine Kegelstumpfform aufweist, und eine zum Stützen des Wulstkerns (5) geeignete horizontale Mittelfläche (11) und eine zum Stützen des Kernreiters (6) geeignete geneigte Umfangsfläche (12) umfasst; und
eine Verriegelungsvorrichtung (13), die dazu geeignet ist, den Wulstkern (5) zu halten, der auf der horizontalen Mittelfläche (11) der Stützscheibe (10) aufliegt, und die umfasst: eine Vielzahl von Kreissektoren (14), die innerhalb der horizontalen Mittelfläche (11) angeordnet sind und die radial zwischen einer zusammengezogenen entriegelten Position und einer expandierten verriegelten Position beweglich sind, und eine erste Betätigungsvorrichtung (15), die die radiale Bewegung der Kreissektoren (14) ausführt;
wobei eine kreisförmige Stützplatte (16) bereitgestellt ist, die horizontal, starr und fest mit der Welle (8) verbunden angeordnet ist, welche die erste Betätigungsvorrichtung (15) trägt und die Stützscheibe (10) getrennt von der ersten Betätigungsvorrichtung (15) so trägt, dass sie mittels mindestens einer ersten Feststellschraube (31) entfernt werden kann;
die Stützscheibe (10) eine einzige kreisförmige mittlere Öffnung (17) aufweist, wobei eine Vielzahl von Verbindungselementen (18) angeordnet ist, von denen jedes eine mechanische Verbindung zwischen der ersten Betätigungsvorrichtung (15) und einem entsprechenden Kreissektor (14) ausführt; und
jedes Verbindungselement (18) mittels mindestens einer zweiten Feststellschraube lösbar mit der ersten Betätigungsvorrichtung (15) verbunden ist und mittels mindestens einer dritten Feststellschraube (22) auch lösbar mit dem entsprechenden Kreissektor (14) verbunden ist.

2. Drehtrommel (7) nach Anspruch 1, wobei jeder Kreissektor (14) eine Kopplungsaufnahme (19) umfasst, und jedes Verbindungselement (18) ein Kopplungsende (20) aufweist, das in die entsprechende Kopplungsaufnahme (19) eingesetzt ist und die Form der Kopplungsaufnahme (19) negativ reproduziert.

3. Drehtrommel (7) nach Anspruch 2, wobei jede Kopplungsaufnahme (19) eine erste Durchgangsbohrung (21) aufweist, durch die eine dritte Feststellschraube (22) angeordnet ist, die in eine zweite Gewindebohrung (23) im Kopplungsende (20) des entsprechenden Verbindungselements (18) eingeschraubt ist.

4. Drehtrommel (7) nach Anspruch 3, wobei die erste Durchgangsbohrung (21) eine radial längliche Form aufweist, die auf einer Seite eine Breite aufweist, die kleiner ist als der Durchmesser des Kopfes der ersten Feststellschraube (22) und auf der gegenüberliegenden Seite eine Breite, die größer ist als der Durchmesser des Kopfes der dritten Feststellschraube (22).

5. Drehtrommel (7) nach Anspruch 2, 3 oder 4, wobei jede Kopplungsaufnahme (19) eine dritte Durchgangsbohrung (24) aufweist, durch die ein erster Referenzstift (25) angeordnet ist, der in eine vierte Blindbohrung (26), eingesetzt ist, die im Kopplungsende (20) des entsprechenden Verbindungselements (18) ausgebildet ist.

6. Drehtrommel (7) nach Anspruch 5, wobei die dritte Durchgangsbohrung (24) eine radial längliche Form aufweist.

7. Drehtrommel (7) nach einem der Ansprüche 1 bis 6, wobei die erste Betätigungsvorrichtung (15) für jeden Kreissektor (14) eine radial angeordnete und auf der Stützplatte (16) gelagerte Führung (27) und einen entlang der Führung (27) gleitenden Schieber (28) umfasst, der starr mit dem entsprechenden Verbindungselement (18) verbunden ist.

8. Drehtrommel (7) nach Anspruch 7, wobei die erste Betätigungsvorrichtung (15) einen einzigen gemeinsamen pneumatischen Aktuator (29) umfasst, der die radiale Position der Schieber (28) entlang der Führungen (27) synchron verändert.

9. Drehtrommel (7) nach einem der Ansprüche 1 bis 8, wobei die Stützscheibe (10) mindestens eine fünfte Durchgangsbohrung (30) aufweist, durch die eine erste Feststellschraube (31) angeordnet ist, die in eine sechste Gewindebohrung (32) in der Stützplatte (16) eingeschraubt ist.

10. Drehtrommel (7) nach Anspruch 9, wobei die fünfte Durchgangsbohrung (30) eine in Umfangsrichtung längliche Form aufweist, die auf einer Seite eine Breite aufweist, die kleiner ist als der Durchmesser des Kopfes der ersten Feststellschraube (31) und auf der gegenüberliegenden Seite eine Breite, die größer ist als der Durchmesser des Kopfes der ersten Feststellschraube (31).

11. Drehtrommel (7) nach Anspruch 9 oder 10, wobei jede Kopplungsaufnahme (19) eine siebte Durchgangsbohrung (30) aufweist, durch die ein zweiter Referenzstift (34) angeordnet ist, der in eine achte Blindbohrung (35) in der Stützplatte (16) eingesetzt ist.

12. Drehtrommel (7) nach Anspruch 11, wobei die siebte Durchgangsbohrung (30) eine in Umfangsrichtung längliche Form aufweist.

13. Drehtrommel (7) nach Anspruch 11 oder 12, wobei die siebte Durchgangsbohrung (30) mit der fünften Durchgangsbohrung (30) übereinstimmt.

14. Drehtrommel (7) nach einem der Ansprüche 9 bis 13, wobei:
die Stützscheibe (10) einen Montagering (36) umfasst, der um die mittlere Öffnung (17) herum angeordnet ist und die gleiche mittlere Öffnung (17) begrenzt und auf der Stützplatte (16) aufliegt;
die fünfte Durchgangsbohrung (30) durch den Montagering (36) hindurch ausgebildet ist; und
zwischen dem Montagering (36) und der horizontalen Mittelfläche (11) Kreissektordurchgänge (37) so ausgebildet sind, dass die horizontale Mittelfläche (11) mittels einer Vielzahl von radial ausgerichteten Speichen (38) mit dem Montagering (36) verbunden ist.

15. Drehtrommel (7) nach einem der Ansprüche 1 bis 14, wobei:
die horizontale Mittelfläche (11) eine Vielzahl von durchgehenden Entnahmeöffnungen (40) aufweist, die sich jeweils radial nach innen in Bezug auf den auf der horizontalen Mittelfläche (11) aufliegenden Wulstkern (5) erstrecken;
mindestens einige Kreissektoren (14) der Verriegelungsvorrichtung (13) eine Vielzahl von Aussparungen (41) aufweisen, die jeweils axial mit einer entsprechenden Entnahmeöffnung (40) ausgerichtet sind und die eine Größe aufweisen, die nicht kleiner als die Größe der gleichen Entnahmeöffnung (40) ist; und
ein Entnahmesystem (42) bereitgestellt ist, das dazu geeignet ist, einen fertigen Wulst (4) von der Stützscheibe (10) zu entfernen und umfasst: eine Vielzahl von Haken (43), die jeweils "L"-geformt und dazu geeignet sind, in eine entsprechende Entnahmeöffnung (40) eingesetzt zu werden, die entlang des Wulstkerns (5) verläuft; und eine Betätigungseinrichtung (44), die dazu geeignet ist, die Haken (43) vertikal nach unten zu bewegen, um die Haken (43) durch die jeweiligen, entlang des Wulstkerns (5) verlaufenden Entnahmeöffnungen (40) einzusetzen, dann die Haken (43) radial nach außen zu bewegen, um in den Wulstkern (5) einzugreifen, und schließlich die Haken (43) vertikal nach oben zum Anheben der Wulst (4) bewegen zu können.

16. Verfahren zur Anpassung der Größe der Drehtrommel (7) nach einem der Ansprüche von 1 bis 15 an einen anderen Wulstdurchmesser (4); wobei das Verfahren die folgenden Schritte umfasst:
Entfernen der Kreissektoren (14) der Verriegelungsvorrichtung (13);
Entfernen der alten Stützscheibe (10);
Einsetzen einer neuen Stützscheibe (10) mit einem anderen Durchmesser als die alte Stützscheibe (10); und
Wiedereinsetzen der zuvor entfernten Kreissektoren (14).

## Revendications

1. Tambour rotatif (7) pour la formation d'un talon (4) d'un pneumatique (1) ; le tambour rotatif (7) comprenant :
un arbre central (8) monté rotatif afin de tourner autour d'un axe vertical (9) de rotation ;
un disque de support (10) qui est agencé horizontalement, étant porté par l'arbre central (8), ayant une forme tronconique et comprenant une surface horizontale centrale (11) appropriée pour supporter la tringle de talon (5) et une surface inclinée périphérique (12) appropriée pour supporter le bourrage sur tringle (6) ; et
un dispositif de verrouillage (13), qui est approprié pour maintenir la tringle de talon (5) reposant sur la surface horizontale centrale (11) du disque de support (10) et comprenant : une pluralité de secteurs circulaires (14) qui sont agencés au sein de la surface horizontale centrale (11) et qui sont mobiles radialement entre une position déverrouillée contractée et une position verrouillée déployée et un premier dispositif d'actionnement (15) qui met en oeuvre le mouvement radial des secteurs circulaires (14) ;
dans lequel une plaque de support circulaire (16) est fournie, laquelle est agencée horizontalement, rigidement solidaire de l'arbre (8), portant le premier dispositif d'actionnement (15) et portant, séparément du premier dispositif d'actionnement (15), le disque de support (10) d'une manière telle qu'il peut être retiré au moyen d'au moins une première vis de verrouillage (31) ;
le disque de support (10) a une ouverture centrale circulaire unique (17) dans laquelle une pluralité d'éléments de liaison (18) est agencée, chacun de ceux-ci mettant en oeuvre une liaison mécanique entre le premier dispositif d'actionnement (15) et un secteur circulaire correspondant (14) ; et
chaque élément de liaison (18) est relié de façon amovible au moyen d'au moins une deuxième vis de verrouillage au premier dispositif d'actionnement (15) et est également relié de façon amovible au moyen d'au moins une troisième vis de verrouillage (22) au secteur circulaire correspondant (14).

2. Tambour rotatif (7) selon la revendication 1, dans lequel chaque secteur circulaire (14) comprend un logement de couplage (19) et chaque élément de liaison (18) a une extrémité de couplage (20) qui est insérée dans le logement de couplage correspondant (19) et reproduit en négatif la forme du logement de couplage (19).

3. Tambour rotatif (7) selon la revendication 2, dans lequel chaque logement de couplage (19) a un premier trou traversant (21) à travers lequel une troisième vis de verrouillage (22) est agencée, laquelle est vissée dans un deuxième trou fileté (23) réalisé dans l'extrémité de couplage (20) de l'élément de liaison correspondant (18).

4. Tambour rotatif (7) selon la revendication 3, dans lequel le premier trou traversant (21) a une forme radialement allongée ayant, sur un côté, une largeur qui est inférieure au diamètre de la tête de la première vis de verrouillage (22) et, sur le côté opposé, une largeur qui est supérieure au diamètre de la tête de la troisième vis de verrouillage (22).

5. Tambour rotatif (7) selon la revendication 2, 3 ou 4, dans lequel chaque logement de couplage (19) a un troisième trou traversant (24) à travers lequel une première broche de référence (25) est agencée, laquelle est insérée dans un quatrième trou borgne (26) réalisé dans l'extrémité de couplage (20) de l'élément de liaison correspondant (18).

6. Tambour rotatif (7) selon la revendication 5, dans lequel le troisième trou traversant (24) a une forme radialement allongée.

7. Tambour rotatif (7) selon l'une des revendications 1 à 6, dans lequel, pour chaque secteur circulaire (14), le premier dispositif d'actionnement (15) comprend un guide (27) agencé radialement et monté sur la plaque de support (16) et une glissière (28) qui coulisse le long du guide (27) et qui est solidarisée à l'élément de liaison correspondant (18).

8. Tambour rotatif (7) selon la revendication 7, dans lequel le premier dispositif d'actionnement (15) comprend un actionneur pneumatique commun unique (29) qui fait varier de façon synchrone la position radiale des glissières (28) le long des guides (27).

9. Tambour rotatif (7) selon l'une des revendications 1 à 8, dans lequel le disque de support (10) a au moins un cinquième trou traversant (30) à travers lequel une première vis de verrouillage (31) est agencée, laquelle est vissée dans un sixième trou fileté (32) réalisé dans la plaque de support (16).

10. Tambour rotatif (7) selon la revendication 9, dans lequel le cinquième trou traversant (30) a une forme circonférentiellement allongée ayant, sur un côté, une largeur qui est inférieure au diamètre de la tête de la première vis de verrouillage (31) et, sur le côté opposé, une largeur qui est supérieure au diamètre de la tête de la première vis de verrouillage (31).

11. Tambour rotatif (7) selon la revendication 9 ou 10, dans lequel chaque logement de couplage (19) a un septième trou traversant (30) à travers lequel une deuxième broche de référence (34) est agencée, laquelle est insérée dans un huitième trou borgne (35) réalisé dans la plaque de support (16).

12. Tambour rotatif (7) selon la revendication 11, dans lequel le septième trou traversant (30) a une forme circonférentiellement allongée.

13. Tambour rotatif (7) selon la revendication 11 ou 12, dans lequel le septième trou traversant (30) coïncide avec le cinquième trou traversant (30).

14. Tambour rotatif (7) selon l'une des revendications 9 à 13, dans lequel :
le disque de support (10) comprend un anneau de montage (36), qui est agencé autour de l'ouverture centrale (17), délimitant la même ouverture centrale (17) et reposant sur la plaque de support (16) ;
le cinquième trou traversant (30) est réalisé à travers l'anneau de montage (36) ; et
entre l'anneau de montage (36) et la surface horizontale centrale (11), des voies de passage de secteur circulaire (37) sont réalisées de telle sorte que la surface horizontale centrale (11) soit reliée à l'anneau de montage (36) uniquement au moyen d'une pluralité de rayons orientés radialement (38).

15. Tambour rotatif (7) selon l'une des revendications 1 à 14, dans lequel :
la surface horizontale centrale (11) a une pluralité d'ouvertures de retrait (40) traversantes, chacune de celles-ci s'étendant radialement de façon interne par rapport à la tringle de talon (5) reposant sur la surface horizontale centrale (11) ;
au moins certains secteurs circulaires (14) du dispositif de verrouillage (13) ont une pluralité de renfoncements (41) dont chacun est axialement aligné sur une ouverture de retrait correspondante (40) et qui a une taille qui n'est pas inférieure à la taille de la même ouverture de retrait (40) ; et
un système de retrait (42) est fourni, lequel est approprié pour retirer un talon terminé (4) du disque de support (10) et comprend : une pluralité de crochets (43), dont chacun est en forme de « L » et est approprié pour être inséré au sein d'une ouverture de retrait correspondante (40) passant à côté de la tringle de talon (5) ; et un dispositif d'actionnement (44) qui est approprié pour déplacer les crochets (43) verticalement vers le bas afin d'insérer les crochets (43) à travers les ouvertures de retrait respectives (40) passant à côté de la tringle de talon (5), puis pour pouvoir déplacer les crochets (43) radialement vers l'extérieur afin de venir en prise avec la tringle de talon (5) et enfin pour pouvoir déplacer les crochets (43) verticalement vers le haut afin de lever le talon (4).

16. Procédé d'adaptation de la taille du tambour rotatif (7) conformément à l'une des revendications 1 à 15 à un diamètre différent de talon (4) ; le procédé comprend les étapes consistant à :
retirer les secteurs circulaires (14) du dispositif de verrouillage (13) ;
retirer l'ancien disque de support (10) ;
insérer un nouveau disque de support (10) ayant un diamètre différent de celui de l'ancien disque de support (10) ; et
réinsérer les secteurs circulaires (14) précédemment retirés.
